# EUROPEAN PATENT APPLICATION

(11) **EP 4 844 926 A2**
(43) Date of publication of application: **25.11.2026**
(21) Application number: 26198503.0
(22) Date of filing: 10.11.2023
(51) Int. Cl.: H01M 50/30

(54) **BIDIRECTIONAL VENTING DEVICE AND SECONDARY BATTERY INCLUDING THE SAME**

(30) Priority: 15.11.2022 KR 20220152444
(62) Document number(s) of the earlier application(s) in accordance with Art. 76 EPC: 23891921.1 / 4 507 100
(71) Applicant: LG Energy Solution, Ltd., Seoul 07335 (KR)
(72) Inventor: BOK, Cheon Hee, 34122 Daejeon (KR); SUNG, Joo Hwan, 34122 Daejeon (KR)
(74) Representative: Goddar, Heinz J.

(57) **Abstract**

Disclosed herein relates to a bidirectional venting device, including: a rupture disk provided with a notch part that ruptures when a pressure exceeds a preset value; and a mounting part provided along the border of the rupture disk, wherein the notch part includes: a first notch part formed along a left half-surface corner of the rupture disk, and a second notch part formed along a right half-surface corner of the rupture disk, spaced apart so as not to connect with the first notch part.

## Description

### TECHNICAL FIELD

The present invention relates to a bidirectional venting device and a secondary battery including the same, which improves safety by directing the discharge of dangerous factors such as high-temperature gases, sparks, heated particles, and the like from a secondary battery having experienced thermal runaway to the sides instead of the top.

This application claims the benefit of priority from Korean Patent Application No. 10-2022-0152444, filed Nov. 15, 2022, the disclosure of which is incorporated herein by reference in its entirety.

### BACKGROUND TECHNOLOGY OF THE INVENTION

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type batteries, cylindrical batteries, prismatic batteries, and pouch-type batteries based on the shape of the battery case. In a secondary battery, an electrode assembly mounted inside the battery case is a chargeable/dischargeable power generator consisting of a laminated structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause another increase in temperature, resulting in a feedback chain reaction that will eventually lead to the catastrophic condition of thermal runaway.

When thermal runaway occurs in a secondary battery, the temperature and pressure rise together, and if the temperature and pressure rise to a level that exceeds the thermal and pressure performance of the secondary battery, the structure of the secondary battery will eventually collapse. When the structure of the secondary battery collapses, a large amount of air is supplied to the interior, causing a fire or explosion to grow uncontrollably and spread to the surrounding area, causing great damage.

To prevent this structural collapse, secondary batteries, especially cylindrical or prismatic batteries, are often equipped with a venting device. A venting device is a kind of safety valve that releases the pressure inside the secondary battery by rupturing when the pressure exceeds a certain level.

However, most current venting devices are designed to discharge dangerous factors such as high-temperature gases, sparks, heated particles, and the like directly upwards. When the secondary battery is used in an electric vehicle, these venting devices may cause safety problems by directing the dangerous factors toward the driver or passengers.

### DESCRIPTION OF THE INVENTION

### TECHNICAL PROBLEM

The present invention aims to provide a venting device and a secondary battery including the same that improves safety by directing the discharge of dangerous factors such as high-temperature gases, sparks, heated particles, and the like ejected from a secondary battery having experienced thermal runaway to both sides instead of directly upwards.

However, the technical problems that the present invention seeks to address are not limited to those described above, and other problems not mentioned will be apparent to those of ordinary skill in the art from the following description of the invention.

### TECHNICAL SOLUTION

The present invention relates to a bidirectional venting device, which in one example includes: a rupture disk provided with a notch part that ruptures when a pressure exceeds a preset value; and a mounting part provided along the border of the rupture disk, wherein the notch part includes: a first notch part formed along a left half-surface corner of the rupture disk, and a second notch part formed along a right half-surface corner of the rupture disk, spaced apart so as not to connect with the first notch part.

The rupture disk ruptures so that the first and second notch parts form a butterfly shape upon application of a pressure exceeding a preset value.

In an exemplary embodiment of the present invention, the first and second notch parts, based on an imaginary line of symmetry passing through the center of which they are disposed separately from each other, may increase in notch depth as the distance from the line of symmetry increases.

For example, the first and second notch parts may be shaped in such a way that the change in the notch depth is linear.

Moreover, the first and second notch parts may have a rate of change in the notch depth that is greater the farther away from the line of symmetry.

Alternatively, as another example, the first and second notch parts may be shaped in such a way that the change in the notch depth is discontinuous, forming a shape of a staircase.

Accordingly, the first and second notch parts may start rupture from the left and right corners where the notch depth is deep, in proportion to the magnitude of the pressure exceeding the preset value.

Meanwhile, the present invention provides a secondary battery including: a battery case provided with a space for storing an electrode assembly; and the bidirectional venting mounted on at least one side of the battery case.

The bidirectional venting device is airtightly mounted such that the first and second notch parts are externally exposed to the venting holes formed in the battery case.

The mounting part may be fixed by welding to the battery case while aligned with the venting holes.

Alternatively, the mounting part may be provided with a wall-shaped border that is inserted into the venting hole.

Also, in the mounting part may be provided with a support frame crossing the middle of which the first and second notch parts are separately disposed from each other.

### ADVANTAGEOUS EFFECTS

According to the bidirectional venting device of the present invention having the above configuration, the notch part that ruptures when a pressure exceeding a set standard is applied are formed separately from each other along the left and right half-surface corners of the rupture disk, and accordingly, when the rupture disk ruptures, the first and second notch parts rupture to form a butterfly shape, so that dangerous factors such as high-temperature gases, sparks, heated particles, and the like are discharged to both sides of the venting device instead of directly upwards. As a result, the venting device of the present invention can improve safety when applied to medium and large-sized secondary batteries for automobiles by discharging dangerous factors to the sides rather than directly upwards, which is towards the driver or passengers.

In addition, the bidirectional venting device of the present invention allows the notch depth of the notch part to be formed deeper and deeper toward the left and right corners of the rupture disk, so that in the early stages of thermal runaway generated inside the secondary battery, the notch part can be ruptured minimally to discharge only a small amount of ejecta in both side directions, thereby suppressing the promotion of combustion by air inflow while preventing the discharge to the direct upward direction as much as possible. In addition, in a situation where a thermal runaway progresses to a final state and a rapid pressure release is required, the entire notch part may be ruptured to secure a maximum discharge area. Thus, the bidirectional venting device of the present invention can greatly improve the safety of a secondary battery.

However, the technical effects of the present invention are not limited to those described above, and other effects not mentioned will be apparent to one of ordinary skill in the art from the following description of the invention.

### BRIEF DESCRIPTION OF THE DIAGRAMS

The following diagrams, which accompany this specification, illustrate preferred embodiments of the invention and serve to further illustrate the technical ideas of the invention in conjunction with the detailed description of the invention that follows, and the invention is not to be construed as limited to what is shown in such diagrams.
FIG. 1 is a diagram illustrating one embodiment of a bidirectional venting device according to the present invention.
FIG. 2 is a cross-sectional view of the incision along the "A-A" line in FIG. 1.
FIG. 3 is a diagram illustrating a bidirectional venting device with the first and second notch parts ruptured, respectively.
FIGS. 4 through 6 illustrate the structure of the first and second notch parts in a bidirectional venting device according to another exemplary embodiment of the present invention.
FIGS. 7 and 8 are diagrams illustrating different degrees of opening of the first and second notch parts.
FIG. 9 is a diagram illustrating an example of a bidirectional venting device of the present invention being mounted on a secondary battery.

### BEST MODE FOR INVENTION

The present invention is subject to various modifications and can have many embodiments, certain of which are described in detail below.

However, this is not intended to limit the present invention to any particular embodiment and is to be understood to include all modifications, equivalents, or substitutions that fall within the scope of the thought and technology of the present invention.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a bidirectional venting device, which in one example includes a rupture disk having a notch part that ruptures when a pressure exceeding a preset value is applied, and a mounting part provided along a border of the rupture disk, wherein the notch part includes a first notch part formed along a left half-surface corner of the rupture disk, and a second notch part formed along a right half-surface corner of the rupture disk, spaced apart so as not to connect with the first notch part.

And, the rupture disk, upon application of a pressure exceeding a preset value, ruptures the first and second notch parts to form a butterfly shape.

According to the bidirectional venting device of the present invention with this configuration, the notch part that ruptures when a pressure exceeding the standard is applied is formed separately from each other along the left half and right half-surface corners of the rupture disk, so that when the rupture disk ruptures, the first and second notch parts rupture in a butterfly shape, so that dangerous factors such as high-temperature gases, flames, heated particles, and the like are discharged to both sides of the venting device instead of directly upwards.

As a result, the venting device of the present invention, when applied to medium to large-sized secondary batteries for automobiles, can improve safety by directing dangerous factors to the side rather than directly upwards, which is towards the driver or passengers.

### EXAMPLES FOR CARRYING OUT THE INVENTION

Hereinafter, with reference to the accompanying drawings, a specific embodiment of a bidirectional venting device 100 and a secondary battery 200 including the same according to the present invention will be described in detail. For reference, the directions of front, back, up, down, left and right designating relative positions used in the following description are intended to aid in the understanding of the invention, and refer to the directions shown in the diagrams unless otherwise defined.

### [First embodiment]

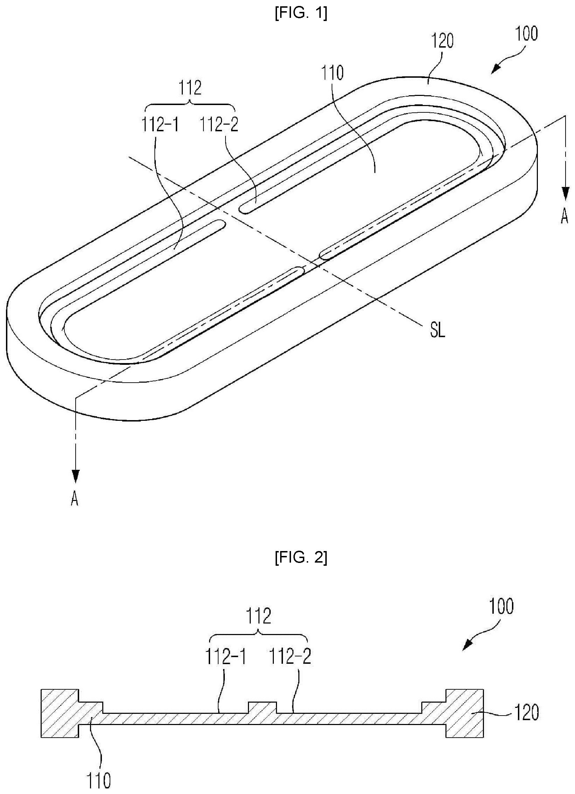

FIG. 1 is a diagram illustrating one embodiment of a bidirectional venting device 100 according to the present invention, and FIG. 2 is a cross-sectional view through an incision along line "A-A" in FIG. 1.

The present invention illustrated is a bidirectional venting device 100 including a rupture disk 110 having a notch part 112 that ruptures when a pressure exceeding a preset value is applied, and a mounting part 120 provided along a border of the rupture disk 110.

The rupture disk 110 is a thin plate-like member made of metal with a notchprocessed notch part 112 formed on its surface. The bidirectional venting device 100 is mounted on the secondary battery 200, and when the internal pressure of the sealed battery case 210 rises, the pressure causes tensile deformation across the thin rupture disk 110, which then tears off the weaker notch part 112 to relieve the internal pressure of the case 210.

The mounting part 120 is the border portion where the bidirectional venting device 100 is coupled to the case 210 of the secondary battery 200, and also serves to structurally support the rupture disk 110. The mounting part 120 can be shaped in a variety of ways, for example in the form of a plate thicker than the rupture disk 110, or in the form of a well with protruding side walls 122 surrounding the rupture disk 110.

Here, the bidirectional venting device 100 of the present invention includes a pair of notch parts 112-1, 112-2 where the notch parts 112 are independent of each other. Specifically, the notch part 112 of the present invention includes a first notch part 112-1 formed along a left half-surface corner of the rupture disk 110, and a second notch part 112-2 formed along a right half-surface corner of the rupture disk 110, spaced apart so as not to connect with the first notch part 112-1.

Referring to FIG. 2, the first and second notch parts 112-1, 112-2 are separated from each other relative to an imaginary line of symmetry SL that crosses approximately the center of the rupture disk 110. That is, the original thickness of the rupture disk 110 is maintained because there is no notching in the center region of the rupture disk 110 separating the first and second notch parts 112-1, 112-2, and the first and second notch parts 112-1, 112-2 are formed by performing notching in the form of lines along the left and right half-surface corners of the rupture disk 110, respectively. Since the thin first and second notch parts 112-1, 112-2 have a lower rupturing strength than other parts of the rupture disk 110, when a pressure exceeding a prescribed level is applied, a rupture occurs in the rupture disk 110 along the first and second notch parts 112-1, 112-2.

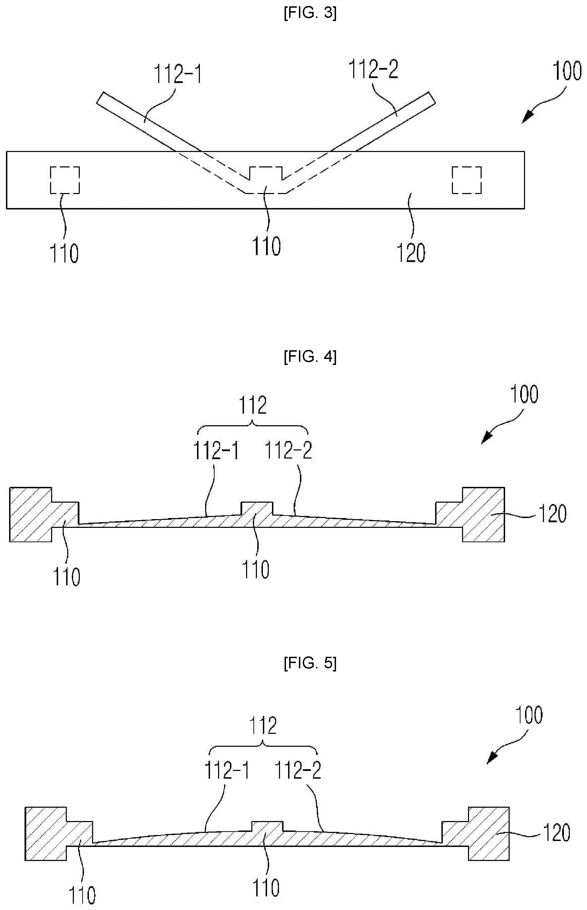

FIG. 3 is a diagram illustrating a bidirectional venting device 100 with the first and second notch parts 112-1, 112-2 ruptured, respectively. As shown, as rupture occurs along the first and second notch parts 112-1, 112-2 in the form of a U-shaped line, the first and second notch parts 112-1, 112-2 are lifted upward by pressure from the inside, with the center region of the rupture disk 110 separating the first and second notch parts 112-1, 112-2 as a support. In other words, when a pressure exceeding a preset value is applied to the bidirectional venting device 100, the rupture disk 110 ruptures in both left and right directions so that the first and second notch parts 112-1, 112-2 form a butterfly shape, and accordingly, gas or sparks ejected from the interior of the secondary battery 200 equipped with the bidirectional venting device 100 is discharged at an angle to the sides rather than directly upwards.

### [Second embodiment]

FIGS. 4 through 6 illustrate a second embodiment of the bidirectional venting device 100 of the present invention, in particular, a cross-sectional view in an incised plane along the first and second notch parts 112-1, 112-2 as shown in FIG. 2.

In the second embodiment shown, the first and second notch parts 112-1, 112-2 are configured such that, relative to an imaginary line of symmetry SL through the center of the separately disposed ends of the rupture disk 110, the depth of the notches increases with distance from the line of symmetry SL), i.e., the notches are deepest at the left and right half ends of the rupture disk 110.

According to this second embodiment, when a pressure exceeding a preset value is applied to the rupture disk 110, the first and second notch parts 112-1, 112-2 begin to rupture from the left and right corners with deeper notches, in proportion to the magnitude of the applied pressure. That is, the deeper the notches, the lower the rupture strength, so that the left and right corners with deeper notches rupture first when a pressure exceeding the standard is applied.

Further, if the pressure acting on the rupture disk 110 is sufficient to rupture the thinnest left and right corners of the first and second notch parts 112-1, 112-2, but insufficient to rupture the thicker portions, the first and second notch parts 112-1, 112-2 may not rupture in their entirety, but only a portion of the left and right corners may rupture. In other words, the second embodiment is configured such that the first and second notch parts 112-1, 112-2 are capable of rupturing only a portion thereof, and the degree of opening of the first and second notch parts 112-1, 112-2 increases in proportion to the applied pressure.

According to such second embodiment, when the internal pressure gradually increases as the thermal runaway inside the secondary battery 200 equipped with the bidirectional venting device 100 progresses, the opening degree of the first and second notch parts 112-1, 112-2 gradually increases in response to the rising pressure level. Therefore, in the early stages of thermal runaway, the first and second notch parts 112-1, 112-2 are ruptured in a small manner so that only a small amount of ejecta can be discharged in both directions, thereby suppressing the promotion of combustion by air inflow while preventing the discharge to the direct upward direction as much as possible.

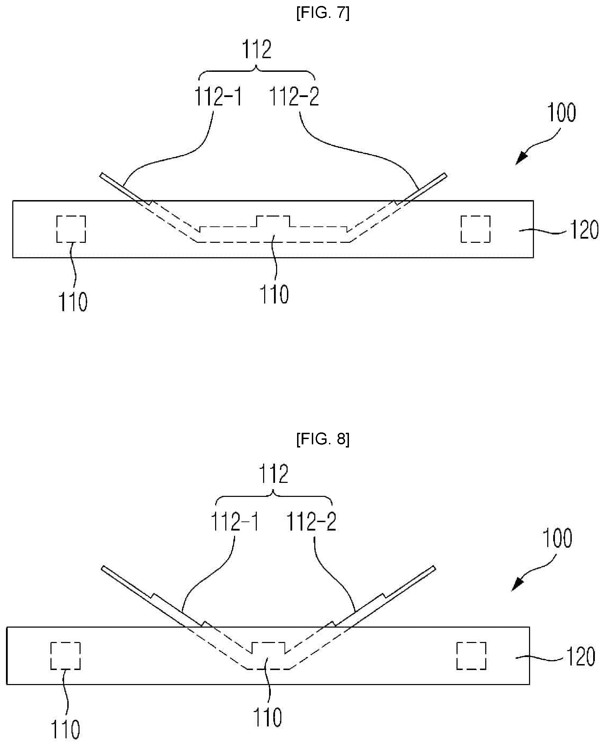

Furthermore, in situations where thermal runaway has progressed to a final state and rapid pressure discharge is required, the entire first and second notch parts 112-1, 112-2 can be ruptured to provide the maximum discharge area. FIGS. 7 and 8 exemplarily illustrate two states in which the degree of opening varies depending on the degree of rupture of the first and second notch parts 112-1, 112-2. The state in FIG. 8 is a case of greater openness than in FIG. 7, where the pressure acting on the rupture disk 110 is higher and the entire first and second notch parts 112-1, 112-2 are ruptured to achieve maximum openness.

Meanwhile, FIGS. 4 through 6 illustrate different modalities in which the thickness of the first and second notch parts 112-1, 112-2 tapers toward the left and right corners.

FIGS. 4 and 5 illustrate embodiments in which the change in notch depth for the first and second notch parts 112-1, 112-2 is linear in shape. In the embodiment of FIG. 4, relative to an imaginary line of symmetry SL through the center of the first and second notch parts 112-1, 112-2 being disposed separately from each other on the rupture disk 110, the notch depth deepens in a straight line of first order function as the distance from the line of symmetry SL increases. In contrast, in the embodiment of FIG. 5, the notch depth varies linearly, with the difference being that the rate of change of the notch depth is in the form of a curve that increases as the distance from the line of symmetry SL increases, rather than a straight line of the first order function.

The embodiment of FIG. 5 is intended to further ensure progressive rupture of the first and second notch parts 112-1, 112-2 in proportion to the internal pressure. As in FIG. 4, if the variation of the notch depth forms a straight line of a first order function, it is possible that the first and second notch parts 112-1, 112-2 will rupture more than desired by inertia when rupture is initiated. Therefore, FIG. 5 is an embodiment to effectively prevent such over-rupture, wherein the left and right corners of the first and second notch parts 112-1, 112-2 are easily ruptured at the beginning of the rupture, but as the rupture progresses toward the center, the thickness is rapidly increased to prevent over-rupture from occurring.

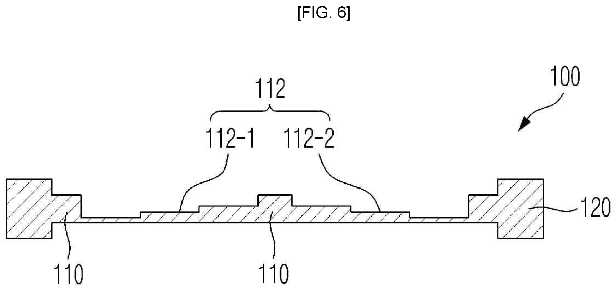

FIG. 6 is a configuration of the first and second notch parts 112-1, 112-2 to achieve the same effect as the embodiment of FIG. 5, wherein the change in notch depth is in the form of a discontinuous step. Since each step of discontinuously varying notch depth results in a discontinuous rupture strength, the likelihood of over-rupture is greatly reduced by the gradual rupture of the first and second notch parts 112-1, 112-2 in response to an increase in pressure.

### [Third embodiment]

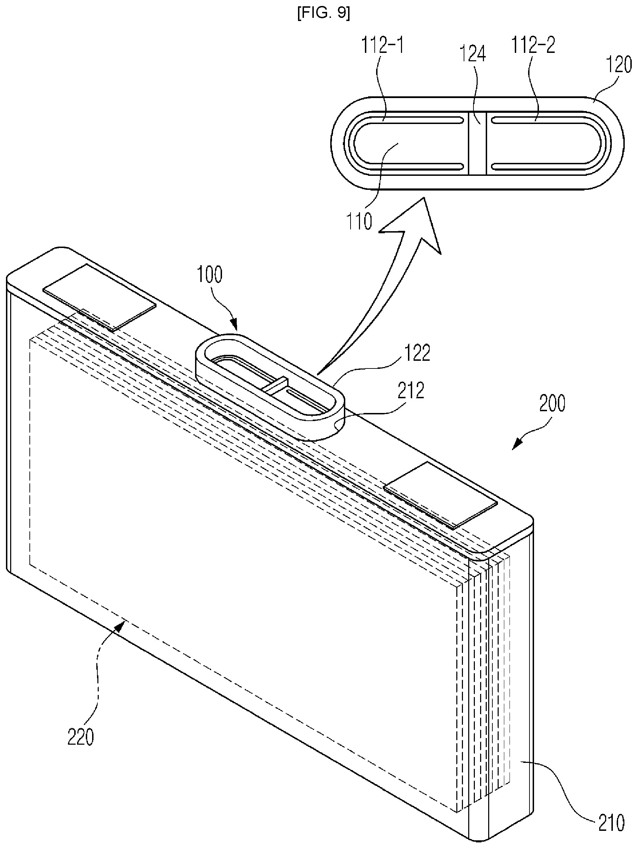

FIG. 9 is a diagram illustrating an example of the bidirectional venting device 100 of the present invention being mounted to a secondary battery 200. The secondary battery 200 includes a battery case 210 having a space for storing an electrode assembly 220, and at least one bidirectional venting device 100 may be mounted on at least one side (top side in the diagram) of the battery case 210.

The bidirectional venting device 100 is airtightly mounted such that the first and second notch parts 112-1, 112-2 are externally exposed with respect to the venting hole 212 formed in the battery case 210. That is, the first and second notch parts 112-1, 112-2 are exposed in their entirety for observation from the outside such that there is no obstruction or interference with the first and second notch parts 112-1, 112-2 rupturing to form a butterfly shape as shown in FIG. 3.

And, the mounting part 120 for fixing the bidirectional venting device to the battery case 210 may be welded to the battery case 210 in alignment with the venting holes 212 formed through the battery case 210. Alternatively, in the embodiment shown in FIG. 9, the mounting part 120 protrudes in the form of a well to form a border in the form of a wall 122 against the rupture disk 110, with which the side wall 122 of the mounting part 120 can be inserted into the venting holes 212 to be coupled. Of course, it is also possible for the side wall 122 of the mounting part 120 to be welded about the venting holes 212 to increase the fixing strength.

And, as shown in the partially enlarged view of FIG. 9, the mounting part 120 may include a support frame 124 spanning the center where the first and second notch parts 112-1, 112-2 are separately disposed from each other. The support frame 124 reliably prevents the rupture of each of the first notch part 112-1 and the second notch part 112-2 from affecting each other, thereby making it more certain that the ruptured first and second notch parts 112-1, 112-2 will form a butterfly shape so that high-temperature gases, dust, and the like can be discharged in both side directions.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### REFERENCE SIGNS

- 100: BIDIRECTIONAL VENTING DEVICE
- 110: RUPTURE DISK
- 112: NOTCH PART
- 112-1: FIRST NOTCH PART
- 112-2: SECOND NOTCH PART
- 120: MOUNTING PART
- 122: SIDE WALL
- 124: SUPPORT FRAME
- 200: SECONDARY BATTERY
- 210: BATTERY CASE
- 212: VENTING HOLE
- 220: ELECTRODE ASSEMBLY
- SL: LINE OF SYMMETRY

In view of the foregoing disclosure, the present invention may be implemented in accordance with the following itemized embodiment examples.
Item 1 A bidirectional venting device, comprising:
   a rupture disk having a notch part that is configured to rupture when a pressure exceeds a preset value; and
   a mounting part extending along a border of the rupture disk,
   wherein the notch part comprises a first notch part formed along a left half-surface corner of the rupture disk, and a second notch part formed along a right half-surface corner of the rupture disk, the second notch part spaced apart from the first notch part.
Item 2 The bidirectional venting device of claim 1, wherein the rupture disk is configured to rupture so that the first and second notch parts form a butterfly shape upon application of the pressure that exceeds the preset value.
Item 3 The bidirectional venting device of item 2, wherein the first and second notch parts each increase in notch depth as a distance from a line of symmetry extending between the first and second notch parts increases.
Item 4 The bidirectional venting device of item 3, wherein the first and second notch parts are shaped such that the increase in the notch depth is linear.
Item 5 The bidirectional venting device of item 4, wherein the first and second notch parts each have a rate of change of the notch depth that is greater as the distance from the line of symmetry increases.
Item 6 The bidirectional venting device of item 3, wherein the first and second notch parts are shaped such that the increase in the notch depth is discontinuous, the notch depth of each of the first and second notch parts forming a shape of a staircase.
Item 7 The bidirectional venting device of item 3, wherein the first and second notch parts are configured to rupture starting from the left and right half-surface corners where the notch depth is greatest, a degree of rupture being in proportion to a magnitude of the pressure exceeding the preset value.
Item 8 A secondary battery comprising:
   a battery case having a space therein configured to receive storage of an electrode assembly; and
   the bidirectional venting device according to item 1, wherein the bidirectional venting device is mounted on at least one side of the battery case.
Item 9 The secondary battery of item 8, wherein the bidirectional venting device is airtightly mounted such that the first and second notch parts are externally exposed to venting holes formed in the battery case.
Item 10 The secondary battery of item 9, wherein the mounting part is fixed by welding to the battery case and is aligned with the venting holes.
Item 11 The secondary battery of item 9, wherein the mounting part has a wall-shaped border that extends into the venting holes.
Item 12 The secondary battery of item 11, wherein the mounting part has a support frame crossing a middle of the battery case that is located between the first and second notch parts.

## Claims

1. A bidirectional venting device (100), comprising:
a rupture disk (110) having a notch part (112) that is configured to rupture when a pressure exceeds a preset value; and
a mounting part (120) extending along a border of the rupture disk (110),
wherein the notch part (112) comprises a first notch part (112-1) formed along a left half-surface corner of the rupture disk (110), and a second notch part (112-2) formed along a right half-surface corner of the rupture disk (110), the second notch part (112-2) spaced apart from the first notch part (112-1), and
wherein a thickness of the mounting part (120) is greater than a thickness of the rupture disk (110), and
wherein the first notch part (112-1) and second notch part (112-2) are spaced apart from the mounting part (120), the first notch part (112-1) and second notch part (112-2) are separated from each other, and
wherein a surface positioned between the mounting part (120) and the first notch part (112-1) or second notch part (112-2) and a surface of a center region separating the first notch part (112-1) and second notch part (112-2) are positioned on the same plane.

2. The bidirectional venting device according to claim 1, depth of the first notch part (112-1) and second notch part (112-2) adjacent to a line of symmetry (SL) extending between the first notch part (112-1) and second notch part (112-2) is different from depth of the first notch part (112-1) and second notch part (112-2) at a portion remote to a line of symmetry (SL) extending between the first notch part (112-1) and second notch part (112-2).

3. The bidirectional venting device (100) of any one of the preceding claims, wherein the rupture disk (110) is configured to rupture so that the first and second notch parts (112-1, 112-2) form a butterfly shape upon application of the pressure that exceeds the preset value.

4. The bidirectional venting device (100) of any one of the preceding claims, the first and second notch parts (112-1, 112-2) each increase in notch depth as a distance from a line of symmetry extending between the first and second notch parts (112-1, 112-2),
wherein the first and second notch parts (112-1, 112-2) are shaped such that the increase in the notch depth is linear.

5. The bidirectional venting device (100) of claim 4, wherein the first and second notch parts (112-1, 112-2) each have a rate of change of the notch depth that is greater as the distance from the line of symmetry increases.

6. The bidirectional venting device (100) of any one of the preceding claims,
the first and second notch parts (112-1, 112-2) each increase in notch depth as a distance from a line of symmetry extending between the first and second notch parts (112-1, 112-2),
wherein the first and second notch parts (112-1, 112-2) are shaped such that the increase in the notch depth is discontinuous, the notch depth of each of the first and second notch parts (112-1, 112-2) forming a shape of a staircase.

7. The bidirectional venting device (100) of any one of the preceding claims, wherein the first and second notch parts (112-1, 112-2) are configured to rupture starting from the left and right half-surface corners where the notch depth is greatest, a degree of rupture being in proportion to a magnitude of the pressure exceeding the preset value.

8. A secondary battery (200) comprising:
a battery case (210) having a space therein configured to receive storage of an electrode assembly; and
the bidirectional venting device (100) according to claim 1, wherein the bidirectional venting device (100) is mounted on at least one side of the battery case (210).

9. The secondary battery (200) of claim 8, wherein the bidirectional venting device (100) is airtightly mounted such that the first and second notch parts (112-1, 112-2) are externally exposed to venting holes (212) formed in the battery case (210).

10. The secondary battery (200) of claim 9, wherein the mounting part (120) is fixed by welding to the battery case (210) and is aligned with the venting holes (212).

11. The secondary battery (200) of claim 9 or 10, wherein the mounting part (120) has a wall-shaped border that extends into the venting holes (212).

12. The secondary battery (200) of claim 11, wherein the mounting part (120) has a support frame (124) crossing a middle of the battery case (210) that is located between the first and second notch parts (112-1, 112-2).
